# FASCICULE DE BREVET EUROPEEN

(11) **EP 2 659 567 B1**
(45) Date de publication et mention de la délivrance du brevet: **01.08.2018**
(21) Numéro de dépôt: 11815534.0
(22) Date de dépôt: 22.12.2011
(51) Int. Cl.: H02J 7/34, H02M 3/135

(54) **MODULE DE CONVERSION DE TENSION ENTRE UN RÉSEAU ÉLECTRIQUE HAUTE TENSION D'UN AÉRONEF ET UN ÉLEMENT DE STOCKAGE D'ÉNERGIE**
MODUL ZUM KONVERTIEREN DAS SPANNUNG ZWISCHEN EINEM HOCH-SPANNUNGSNETZ EINES FLUGZEUGS UND EIN ENERGIESPEICHERELEMENT
MODULE FOR CONVERTING VOLTAGE BETWEEN A HIGH-VOLTAGE ELECTRICAL NETWORK OF AN AIRCRAFT AND AN ENERGY STORAGE ELEMENT

(30) Priorité: 28.12.2010 FR 1061326
(43) Date de publication de la demande: 06.11.2013
(73) Titulaire: Safran Electrical & Power, 31702 Blagnac Cedex (FR); Safran Electronics & Defense, 92100 Boulogne-Billancourt (FR); Safran Landing Systems, 78140 Vélizy-Villacoublay (FR)
(72) Inventeur: VIEILLARD, Sébastien, F-77720 La Chapelle Gauthier (FR); BROSSON, Laurent, Bernard, F-92160 Antony (FR); KARIMI, Charif, F-91400 Orsay (FR); PONTRUCHER, Marc Henri, Yves, F-75011 Paris (FR)
(74) Mandataire: Gevers & Orès
(86) Numéro de dépôt international: PCT/FR2011/053174
(87) Numéro de publication internationale: WO 2012/089973

(56) Documents cités:
- EP-A2- 2 221 952
- WO-A2-2009/156654
- US-A- 5 980 095
- RAFAL K ET AL: "Hybridization of an aircraft emergency electrical network: Experimentation and benefits validation", VEHICLE POWER AND PROPULSION CONFERENCE (VPPC), 2010 IEEE, IEEE, 1 septembre 2010 (2010-09-01), pages 1-6, XP031929123, DOI: 10.1109/VPPC.2010.5728987 ISBN: 978-1-4244-8220-7
- JOVCIC D: "Bidirectional, High-Power DC Transformer", IEEE TRANSACTIONS ON POWER DELIVERY, IEEE SERVICE CENTER, NEW YORK, NY, US, vol. 24, no. 4, 1 octobre 2009 (2009-10-01), pages 2276-2283, XP011276520, ISSN: 0885-8977, DOI: 10.1109/TPWRD.2009.2028600
- DMITRI VINNIKOV ET AL: "New bi-directional DC/DC converter for supercapacitor interfacing in high-power applications", POWER ELECTRONICS AND MOTION CONTROL CONFERENCE (EPE/PEMC), 2010 14TH INTERNATIONAL, IEEE, PISCATAWAY, NJ, USA, 6 septembre 2010 (2010-09-06), pages T11-38, XP031778639, ISBN: 978-1-4244-7856-9
- JOVCIC D: "Bidirectional, High-Power DC Transformer", IEEE TRANSACTIONS ON POWER DELIVERY, IEEE SERVICE CENTER, NEW YORK, NY, US, vol. 24, no. 4, 1 October 2009 (2009-10-01), pages 2276-2283, XP011276520, ISSN: 0885-8977, DOI: 10.1109/TPWRD.2009.2028600
- RAFAL K ET AL: "Hybridization of an aircraft emergency electrical network: Experimentation and benefits validation", VEHICLE POWER AND PROPULSION CONFERENCE (VPPC), 2010 IEEE, IEEE, 1 September 2010 (2010-09-01), pages 1-6, XP031929123, DOI: 10.1109/VPPC.2010.5728987 ISBN: 978-1-4244-8220-7

## Description

L'invention concerne le stockage d'énergie, et plus particulièrement le stockage d'énergie dans les aéronefs.

De nos jours, un aéronef, tel que par exemple un avion, comporte des systèmes électriques, reliés en réseaux électriques, pour alimenter des modules de fonctionnement de l'avion, tels que par exemple des actionneurs électriques. De tels actionneurs électriques se retrouvent notamment dans les commandes de vol et les trains d'atterrissage. Le réseau électrique principal d'un avion fonctionne par exemple en 115 / 200 V en tension alternative et courant alternatif (Alternative Current (AC)) et le réseau de secours fonctionne par exemple en tension continue, par exemple entre 135 V (ou 270 V) et -135 V (respectivement -270 V), en courant continu (Direct Current (DC)), constituant ainsi un réseau en courant continu haute tension (High Voltage Direct Current (HVDC)).

Des convertisseurs sont utilisés dans certains types d'avion pour convertir les courants ou les tensions afin de stocker de l'énergie dans des éléments de stockage d'énergie tels que des batteries, par exemple en tension [0 - 28 V].

Un tel convertisseur est par exemple divulgué dans le document "Hybridization of an aircraft emergency electrical network: Expérimentation and benefits validation" publié par l'IEEE (conférence VPPC1 septembre 2010).

Les convertisseurs des solutions de stockage existantes présentent plusieurs inconvénients :
- ces convertisseurs sont dédiés, c'est-à-dire qu'un convertisseur ne concerne qu'un module de fonctionnement de l'avion, ce qui occupe de l'espace et les rend non compatibles avec d'autres modules de fonctionnement de l'avion,
- ces convertisseurs ne permettent pas de fonctionner avec des hautes tensions,
- ces convertisseurs ne permettent pas de convertir des tensions en autres tensions, notamment entre une tension du réseau de secondaire d'un avion et un élément de stockage,
- ces convertisseurs ne peuvent fonctionner avec un réseau en courant continu haute tension HVDC tel qu'il peut exister dans les avions aujourd'hui car celui-ci n'est pas flottant, c'est-à-dire que le potentiel négatif du convertisseur est relié à la masse constituée par l'avion, ce qui augmente les tensions de mode commun générées pas le convertisseur et ne permet pas d'isoler électriquement l'élément de stockage d'énergie dont les fuites peuvent se répercuter sur les modules de fonctionnement de l'avion. Par exemple, en cas de court-circuit dans le convertisseur, notamment d'un transistor, le réseau électrique et l'élément de stockage peuvent être impactés et tomber en panne,
- ces convertisseurs proposent des solutions avec des isolations galvaniques de type transformateur qui sont très pénalisantes d'un point de vue masse et volume pour des équipements embarqués,
- ces convertisseurs ne sont pas faciles à dimensionner pour adapter le convertisseur à la puissance à transmettre,
- les demandes d'énergie dans un aéronef sont importantes et ponctuelles car elles sont liées à des servitudes imposées, par exemple, par les commandes de vols ou le train d'atterrissage.
- ces convertisseurs comprennent un grand nombre de composants,
- ces convertisseurs n'offre pas de possibilité de réglage du contrôle du courant de charge ou de décharge de l'élément de stockage d'énergie.

Afin de résoudre une partie des inconvénients de l'art antérieur, l'invention propose un module de conversion entre un réseau électrique haute tension d'un aéronef, notamment un réseau en courant continu haute tension, et un élément de stockage d'énergie dudit aéronef, notamment une super-capacité. Le module de conversion étant apte à effectuer réversiblement une conversion entre une tension continue E du réseau électrique haute tension de l'aéronef et une tension continue V_{S} de l'élément de stockage de l'aéronef, la tension V_{S} de l'élément de stockage de l'aéronef étant inférieure et flottante par rapport à la tension E du réseau électrique haute tension de l'aéronef et centrée par rapport à la masse de l'avion, le module comprenant un module d'entrée comprenant deux filtres aptes à recevoir chacun une tension continue E/2, un premier bras et un second bras comprenant des interrupteurs, et des moyens de commande desdits interrupteurs, les moyens de commande fonctionnant par cycle d'une période T de commutation et étant aptes à commander au moins un premier interrupteur et au moins un second interrupteur de manière identique mais décalés d'une demi-période T/2 de sorte que le premier interrupteur soit ouvert quand le second interrupteur est fermé et réciproquement.

Ceci permet notamment :
- d'assurer la charge et la décharge de l'élément de stockage ;
- de sécuriser la perte éventuelle de la fonction en évitant la charge et la décharge non contrôlée de l'élément de stockage d'énergie, par exemple dans le réseau électrique haute tension de l'aéronef,
- de rendre le réseau électrique haute tension de l'aéronef flottant. En particulier, l'élément de stockage d'énergie n'est pas soumis à un mode commun, c'est-à-dire que la différence de potentiels des électrodes de l'élément de stockage d'énergie par rapport au potentiel qu'est la masse avion est constante. Ceci permet un isolement de l'élément de stockage d'énergie et donc d'éviter notamment les fuites d'énergie ;
- le stockage d'énergie, impliquant une optimisation énergétique, par exemple en stockant de l'énergie provenant d'actionneurs électriques pour la redonner plus tard aux mêmes actionneurs ou à d'autres actionneurs ;
- de réduire le câblage dans l'aéronef en stockant l'énergie de manière localisée pour alimenter chaque module de fonctionnement de l'aéronef, évitant ainsi des stockages distribués et dédiés à, par exemple, chaque module de fonctionnement de l'avion.

Les potentiels de l'élément de stockage sont fixés en les centrant par rapport à la masse de l'avion, ce qui a pour effet d'isoler l'élément de stockage du réseau électrique haute tension de l'aéronef dont les éléments sont aussi reliés à la masse avion. Ceci permet de plus de rendre le réseau électrique haute tension de l'aéronef.

Un tel module présente une topologie de convertisseurs multi-niveaux entrelacés, non isolés, à potentiel de sortie fixé.

Un tel module permet en outre notamment :
- d'utiliser des transistors, les transistors formant les interrupteurs du module de conversion, de faible tension,
- de réduire la taille des filtres d'entrée qui sont aptes à recevoir la moitié de la tension, par exemple en augmentant le nombre de bras en parallèle, un bras étant formé de deux demi-ponts,
- de réduire la taille des filtres de sortie,
- d'utiliser des composants à tension moins élevée contribuant à optimiser le rendement, notamment avec de meilleures performances en conduction et en commutation,
- de réduire le rapport cyclique et donc la tension aux bornes des interrupteurs, notamment aux bornes des transistors formant les interrupteurs du module de conversion. Par exemple, lorsque le rapport cyclique est divisé par deux, la tension appliquée aux bornes des transistors est la moitié de celle de la tension continue E, soit E/2,
- d'associer des cellules en parallèle, peu de cellules impliquant peu de volume du module de conversion et plus de cellules impliquant plus de courant commuté et donc d'optimiser le la taille et le rendement du module de conversion,
- en cas de court-circuit d'un composant, par exemple un transistor d'un interrupteur, de protéger l'élément de stockage d'énergie et de l'isoler vis-à-vis de la tension E du réseau électrique. Il n'y a alors pas besoin d'élément protecteur, par exemple un Solid State Power Controller (SSPC).

Selon un aspect de l'invention, les moyens de commande commandent des interrupteurs (k₁, k₁₁, k₄₄, k₄, k₃, k₃₃, k₂₂, k₂), le module d'entrée comprend une première borne d'entrée et une seconde borne d'entrée reliée à la masse, pour l'application d'une première tension E/2, une première inductance Le₁ et une capacité C₁, l'inductance Le₁ et la capacité C₁ se rejoignant à un point de potentiel V_{A}, et une troisième borne d'entrée et la seconde borne d'entrée reliée à la masse, pour l'application d'une première tension E/2, une seconde inductance Le₂ et une capacité C₂, l'inductance Le₂ et la capacité C₂ se rejoignant à un point de potentiel V_{B}, les capacités C₁ et C₂ se rejoignant à un point de potentiel V₀ = 0 V. Le premier bras comprend quatre interrupteurs (k₁, k₁₁, k₄₄, k₄) et deux inductances (Ls₁, Ls₁₁), l'interrupteur k₁ étant situé entre le point de potentiel V_{A} et un point de potentiel V₁, l'inductance Ls₁ étant située entre le point de potentiel V₁ et un point de potentiel V_{C}, l'interrupteur k₁₁ étant situé entre le point de potentiel V₁ et le point de potentiel V₀, l'inductance Ls₁₁ étant située entre le point de potentiel V₀ et un point de potentiel V₄, l'interrupteur k₄₄ étant situé entre le point de potentiel V₀ et le point de potentiel V₄, l'interrupteur k₄ étant situé entre le point de potentiel V₄ et le point de potentiel V_{B}, les moyens de commandes des interrupteurs étant aptes à maintenir simultanément les interrupteurs k₁ et k₄ ouverts et les interrupteurs k₁₁ et k₄₄ fermés et réciproquement, la tension V_{S} étant mesurée entre le point de potentiel V_{C} et V₀. Le second bras comprend quatre interrupteurs (k₃, k₃₃, k₂₂, k₂) et deux inductances (Ls₂, Ls₂₂), l'interrupteur k₃ étant situé entre le point de potentiel V_{A} et un point de potentiel V₃, l'inductance Ls₂ étant située entre le point de potentiel V_{C} et le point de potentiel V₃, l'interrupteur k₃₃ étant situé entre le point de potentiel V₃ et le point de potentiel V₀, l'inductance Ls₂₂ étant située entre le point de potentiel V₀ et un point de potentiel V₂, l'interrupteur k₂₂ étant situé entre le point de potentiel V₀ et le point de potentiel V₂, l'interrupteur k₂ étant situé entre le point de potentiel V₂ et le point de potentiel V_{B}, les moyens de commande des interrupteurs étant aptes à maintenir simultanément les interrupteurs k₁ et k₄ ouverts et les interrupteurs k₁₁ et k₄₄ fermés et réciproquement, la tension V_{S} étant mesurée entre le point de potentiel V_{C} et V₀. Les moyens de commande commandent les interrupteurs k₁ et k₄ de manière identique d'une part et k₂ et k₃ de manière identique d'autre part, les interrupteurs k₁ et k₃ étant décalés d'une demi-période T/2 de sorte que les interrupteurs k₁ et k₄ soient ouverts lorsque les interrupteurs k₂ et k₃ sont fermés et réciproquement.

Ceci permet notamment :
- d'avoir une tension d'isolement égale à la moitié de la tension du ou des éléments de stockage,
- de réduire le nombre d'ondulations de moitié, impliquant notamment moins de stress ou de contraintes sur les composants qui voient ainsi leur durée de vie voire leur rendement augmenter.

Selon un aspect de l'invention, les moyens de commande commandent des interrupteurs (k₁, k₁₁, k₂₂, k₂), le module d'entrée comprend une première borne d'entrée et une seconde borne d'entrée reliée à la masse, pour l'application d'une première tension E/2, une première inductance Le₁ et une capacité C₁, l'inductance Le₁ et la capacité C₁ se rejoignant à un point de potentiel V_{A}, et une troisième borne d'entrée et la seconde borne d'entrée reliée à la masse, pour l'application d'une première tension E/2, une seconde inductance Le₂ et une capacité C₂, l'inductance Le₂ et la capacité C₂ se rejoignant à un point de potentiel V_{B}, les capacités C₁ et C₂ se rejoignant à un point de potentiel V₀ = 0 V. Le premier bras comprend deux interrupteurs (k₁, k₁₁) et une inductance Ls₁, l'interrupteur k₁ étant situé entre le point de potentiel V_{A} et un point de potentiel V₁, l'inductance Ls₁ étant située entre le point de potentiel V₁ et un point de potentiel V_{C1}, l'interrupteur k₁₁ étant situé entre le point de potentiel V₁ et le point de potentiel V₀, la tension V_{S} étant mesurée entre le point de potentiel V_{C1} et V₀, les moyens de commandes des interrupteurs étant aptes à maintenir simultanément l'interrupteur k₁ ouvert et l'interrupteurs k₁₁ fermé et réciproquement, la tension V_{S} étant mesurée entre le point de potentiel V_{C1} et V₀. Le second bras comprend deux interrupteurs (k₂, k₂₂) et une inductance Ls₂, l'interrupteur k₂ étant situé entre le point de potentiel V₂ et le point de potentiel V_{B}, l'inductance Ls₂ étant située entre le point de potentiel V₂ et un point de potentiel V_{C2}, l'interrupteur k₂₂ étant situé entre le point de potentiel V₂ et le point de potentiel V₀, les moyens de commandes des interrupteurs étant aptes à maintenir simultanément l'interrupteur k₂ ouvert et l'interrupteurs k₂₂ fermé et réciproquement, la tension V_{S} étant mesurée entre le point de potentiel V_{C2} et entre le point de potentiel V₀. Les moyens de commande commandent les interrupteurs k₁ et k₂ de manière identique mais décalée d'une demi-période T/2 de sorte que l'interrupteur k₁ soit ouvert lorsque l'interrupteur k₂ est fermé et réciproquement.

Selon un aspect de l'invention, les moyens de commande commandent des interrupteurs (k₁, k₁₁, k₄₄, k₄, k₃, k₃₃, k₂₂, k₂), le module d'entrée comprend une première borne d'entrée et une seconde borne d'entrée reliée à la masse, pour l'application d'une première tension E/2, une première inductance Le₁ et une capacité C₁, l'inductance Le₁ et la capacité C₁ se rejoignant à un point de potentiel V_{A}, et une troisième borne d'entrée et la seconde borne d'entrée reliée à la masse, pour l'application d'une première tension E/2, une seconde inductance Le₂ et une capacité C₂, l'inductance Le₂ et la capacité C₂ se rejoignant à un point de potentiel V_{B}, les capacités C₁ et C₂ se rejoignant à un point de potentiel V₀ = 0 V. Le premier bras comprend quatre interrupteurs (k₁, k₁₁, k₄₄, k₄) et deux inductances (Ls₁, Ls₁₁), l'interrupteur k₁ étant situé entre le point de potentiel V_{A} et un point de potentiel V₁, l'inductance Ls₁ étant située entre le point de potentiel V₁ et un point de potentiel V_{C1}, l'interrupteur k₁₁ étant situé entre le point de potentiel V₁ et le point de potentiel V₀, l'inductance Ls₁₁ étant située entre un point de potentiel V_{C2} et un point de potentiel V₄, l'interrupteur k₄₄ étant situé entre le point de potentiel V₀ et le point de potentiel V₄, l'interrupteur k₄ étant situé entre le point de potentiel V₄ et le point de potentiel V_{B}, les moyens de commandes des interrupteurs étant aptes à maintenir simultanément les interrupteurs k₁ et k₄ ouverts et les interrupteurs k₁₁ et k₄₄ fermés et réciproquement, la tension V_{S} étant mesurée entre le point de potentiel V_{C1} et entre le point de potentiel V₀, et entre le point de potentiel V₀ et le point de potentiel V_{C2}. Le second bras comprend quatre interrupteurs (k₃, k₃₃, k₂₂, k₂) et deux inductances (Ls₂, Ls₂₂), l'interrupteur k₃ étant situé entre le point de potentiel V_{A} et un point de potentiel V₃, l'inductance Ls₂ étant située entre le point de potentiel V₃ et le point de potentiel V_{C1}, l'interrupteur k₃₃ étant situé entre le point de potentiel V₃ et le point de potentiel V₀, l'inductance Ls₂₂ étant située entre le point de potentiel V₂ et un point de potentiel V_{C2}, l'interrupteur k₂₂ étant situé entre le point de potentiel V₀ et le point de potentiel V₂, l'interrupteur k₂ étant situé entre le point de potentiel V₂ et le point de potentiel V_{B}, les moyens de commande des interrupteurs étant aptes à maintenir simultanément les interrupteurs k₁ et k₄ ouverts et les interrupteurs k₁₁ et k₄₄ fermés et réciproquement, la tension V_{S} étant mesurée entre le point de potentiel V_{C1} et entre le point de potentiel V₀, et entre le point de potentiel V₀ et le point de potentiel V_{C2}. Les moyens de commande commandant les interrupteurs k₁ et k₄ de manière identique d'une part et k₂ et k₃ de manière identique d'autre part, k₁ et k₃ étant décalés d'une demi-période T/2 de sorte que les interrupteurs k₁ et k₄ soient ouverts lorsque les interrupteurs k₂ et k₃ sont fermés et réciproquement.

Selon un aspect de l'invention, E = 270 ou 540 V et 60 ≤ V_{S} ≤ 120 V.

L'invention concerne aussi un système de stockage.

Le système de stockage comprend un module de conversion selon tel que défini ci-dessus et au moins un élément de stockage connecté entre les points de potentiel correspondant à la tension V_{S}.

Selon un aspect de l'invention, un élément de stockage est connecté entre les points de potentiel V_{C} et V₀.

Selon un aspect de l'invention, un premier élément de stockage est connecté entre les points de potentiel V_{C1} et V₀ et un second élément de stockage est connecté entre les points de potentiel V₀ et V_{C2}.

Selon un aspect de l'invention, l'élément de stockage est une super-capacité.

Ceci permet d'avoir notamment un élément de stockage d'énergie relativement léger avec une restitution rapide d'énergie, par exemple, par rapport à une batterie. Ceci permet aussi d'avoir une plus haute densité d'énergie et moins de volume qu'un condensateur électrolytique classique.

Selon un aspect de l'invention, la super-capacité est configurée pour stocker de l'énergie lorsqu'une tension d'entrée V_{S} lui est appliquée, avec 60 ≤ V_{S} ≤ 120 V.

Selon un aspect de l'invention, l'élément de stockage est une batterie.

Ceci permet notamment d'avoir une grande densité d'énergie et donc une grande autonomie.

Selon un aspect de l'invention, la batterie est configurée pour stocker de l'énergie lorsqu'une tension d'entrée V_{S} lui est appliquée, avec 60 < V_{S} < 120 V.

L'invention concerne aussi un procédé de conversion de tension.

Le procédé de conversion de tension, entre un réseau électrique haute tension d'un aéronef, notamment un réseau en courant continu haute tension, et au moins un élément de stockage d'énergie dudit aéronef, notamment une super-capacité, comprend une étape réversible de conversion entre une tension E du réseau électrique haute tension de l'aéronef et une tension V_{S} de l'élément de stockage d'énergie de l'aéronef, ladite tension V_{S} de l'élément de stockage d'énergie de l'aéronef étant isolée de la tension E du réseau électrique haute tension de l'aéronef et inférieure à la tension E du réseau électrique haute tension de l'aéronef.

Une forme de réalisation de l'invention va maintenant être décrite plus en détail, à titre d'exemple non limitatif, en référence aux dessins annexés sur lesquels :
La figure 1, représente un système électrique comprenant un réseau électrique haute tension, un module de conversion de tension et un élément de stockage ;
La figure 2, représente un système électrique d'un aéronef comprenant un réseau électrique haute tension, un module de conversion de tension et un élément de stockage ;
La figure 3 représente un module de conversion de tension relié à un élément de stockage
La figure 4 représente un module de conversion de tension relié à un élément de stockage
La figure 5 représente un module de conversion de tension relié à un élément de stockage.

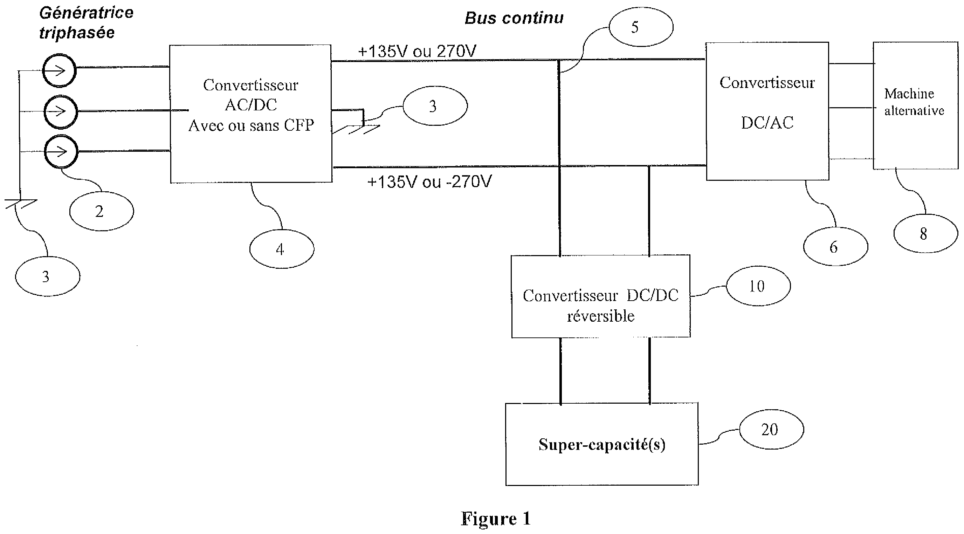

La figure 1 représente un système électrique comprenant plusieurs modules. Le système comprend un réseau électrique haute tension en tension alternative 2, comportant par exemple une génératrice triphasée dont un point est relié à la masse 3. Le système comprend aussi un module de conversion (ou convertisseur) AC/DC 4 qui permet de convertir une tension alternative d'un réseau électrique haute tension 2 en une tension continue d'un réseau (ou bus) en courant continu haute tension 5. Le système comprend aussi une machine alternative 8, par exemple un moteur électrique, et un convertisseur DC/AC 6 auquel la machine alternative 8 est connectée. Le convertisseur DC/AC 6 permet, dans les phases de restitution d'énergie, de convertir la tension alternative de la machine alternative 8 en une tension continue du réseau (ou bus) en courant continu haute tension 5. Le système comprend aussi un module 10 de conversion de tension permettant de convertir une tension du réseau en courant continu haute tension 5 en une tension d'une super-capacité 20 de stockage d'énergie de l'aéronef. Le module 10 de conversion est apte à effectuer réversiblement une conversion entre une tension continue E du réseau en courant continu haute tension 5 et une tension continue V_{S} de la super-capacité 20, la tension continue V_{S} de l'élément de stockage de l'aéronef étant flottante par rapport à la tension continue E du réseau en courant continu haute tension 5. Par « réversiblement », il faut comprendre que le module 10 de conversion est apte à convertir une tension continue E du réseau en courant continu haute tension 5 en une tension continue V_{S} de la super-capacité 20 et réciproquement une tension continue V_{S} de la super-capacité 20 en une tension continue E du réseau en courant continu haute tension 5.

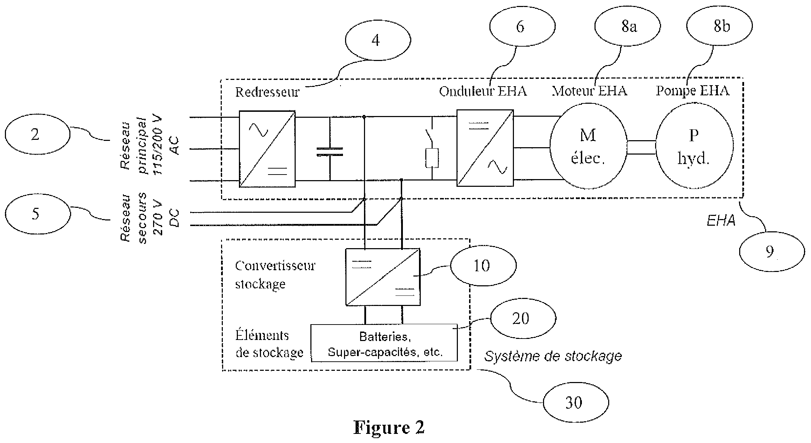

La figure 2 décrit un système électrique d'un aéronef comprenant plusieurs modules. Le réseau électrique principal 2 fonctionne en courant alternatif à des tensions alternatives de 115/200 V. Un redresseur 4 permet de convertir ces tensions en tensions continues du réseau secondaire ou réseau de secours 5 à 270 V en courant continu (ou réseau (ou bus) en courant continu haute tension 5). Une pompe hydraulique 8b est connectée à un moteur électrique 8a fonctionnant un tensions alternatives. Le moteur électrique 8a est connecté à un onduleur 6 qui transforme les tensions alternatives en tensions continues du réseau de secours 5 à 270 V en courant continu. Le système de stockage 30 comprend un module 10 de conversion (ou convertisseur) relié d'une part, par deux connexions, à un ou plusieurs éléments 20 de stockage d'énergie tels que batteries ou super-capacités, et relié d'autre part par deux liens électriques ou connexions respectivement aux points de potentiels + 270 V et - 270 V du réseau de secours 5 à 270 V en courant continu.

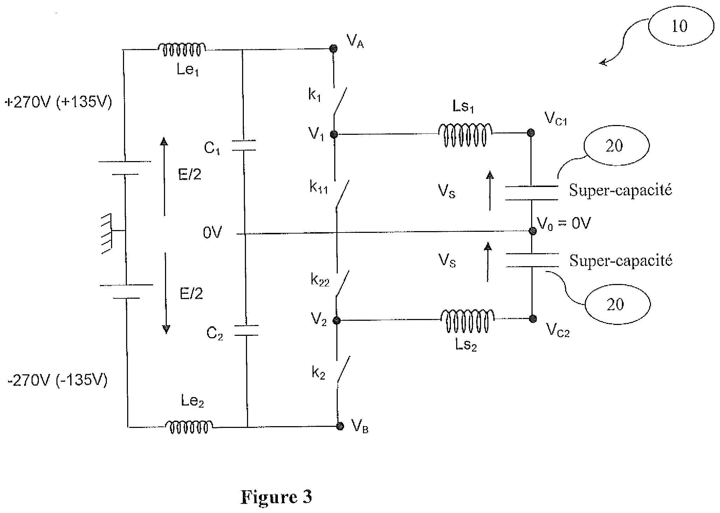

Les figures 3 à 5 représentent trois modes de réalisation d'un module 10 de conversion. Un tel module 10 de conversion entre les tensions E et V_{S} comprend :
- un module d'entrée comprenant deux filtres d'entrée, aptes à recevoir chacun une tension continue E/2,
- un premier bras et un second bras comprenant des interrupteurs formés de transistors, et
- des moyens de commande desdits interrupteurs, les moyens de commande fonctionnant par cycle d'une période T de commutation et étant aptes à commander au moins un premier interrupteur et au moins un second interrupteur de manière identique mais décalés d'une demi-période T/2 de sorte que le premier interrupteur soit ouvert quand le second interrupteur est fermé et réciproquement.

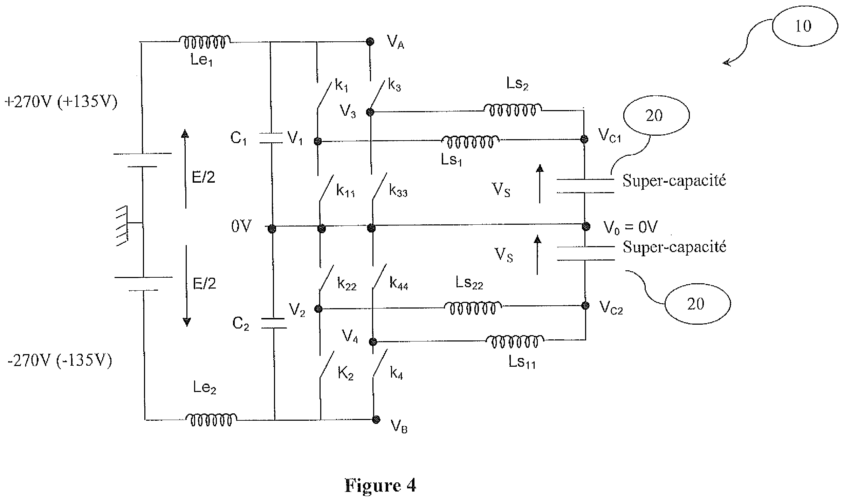

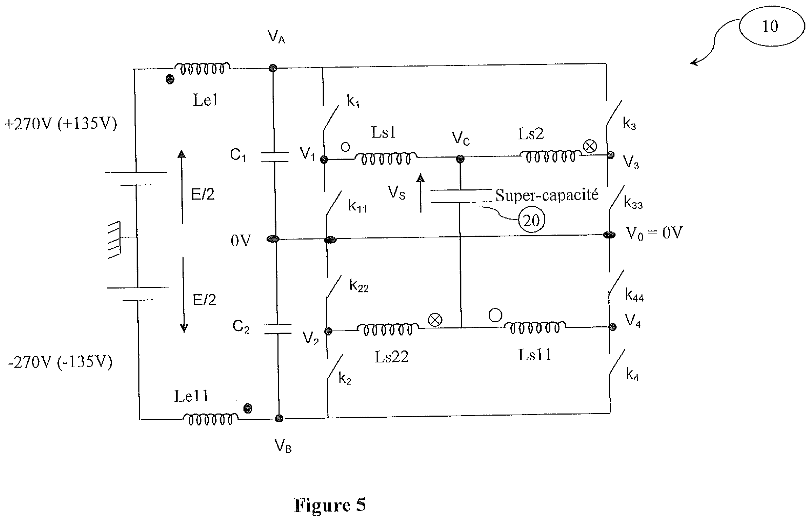

Dans tous les modes de réalisation de l'invention décrits aux figures 3 à 5, des cellules formées chacune d'un premier et d'un second bras peuvent être associées en parallèle, notamment pour augmenter la puissance à transmettre. Un bras est constitué par deux demi-ponts. Par exemple, en référence aux figures 4 et 5 ci-dessous, les transistors k₁ et k₁₁ forment un demi-pont et les transistors k₁, k₁₁, k₄₄, k₄ forment un bras.

L'ensemble formé par les filtres d'entrée des cellules est alors dimensionné pour une fréquence égale au nombre de cellules multiplié par la fréquence de commutation des transistors.

Pour un réseau 270V (135/-135V), des transistors de technologie Mosfet de 300V peuvent être utilisés. Pour un réseau 540V (270/-270V), des transistors Mosfets 600V ou des Igbts (avec diode antiparallèle) peuvent être utilisés. Le choix des uns ou des autres permet d'adapter la puissance du module de conversion.

La figure 3 représente un module 10 de conversion entre les tensions E et V_{S}.

Les moyens de commande commandent des interrupteurs (k₁, k₁₁, k₂₂, k₂).

Le module d'entrée comprend un premier filtre comprenant une première borne d'entrée et une seconde borne d'entrée reliée à la masse avion, pour l'application d'une première tension E/2, une première inductance Le₁ et une capacité C₁, l'inductance Le₁ et la capacité C₁ se rejoignant à un point de potentiel V_{A}.

Le module d'entrée comprend également un second filtre comprenant une troisième borne d'entrée et la seconde borne d'entrée reliée à la masse, pour l'application d'une première tension E/2, une seconde inductance Le₂ et une capacité C₂, l'inductance Le₂ et la capacité C₂ se rejoignant à un point de potentiel V_{B}.

Les capacités C₁ et C₂ se rejoignent à un point de potentiel V₀ = 0 V.

Le premier bras comprend deux interrupteurs (k₁, k₁₁) et une inductance Ls₁, l'interrupteur k₁ étant situé entre le point de potentiel V_{A} et un point de potentiel V₁, l'inductance Ls₁ étant située entre le point de potentiel V₁ et un point de potentiel V_{C1}, l'interrupteur k₁₁ étant situé entre le point de potentiel V₁ et le point de potentiel V₀, la tension V_{S} étant mesurée entre le point de potentiel V_{C1} et V₀, les moyens de commandes des interrupteurs étant aptes à maintenir simultanément l'interrupteur k₁ ouvert et l'interrupteurs k₁₁ fermé et réciproquement, la tension V_{S} étant mesurée entre le point de potentiel V_{C1} et V₀.

Le second bras comprend deux interrupteurs (k₂, k₂₂) et une inductance Ls₂, l'interrupteur k₂ étant situé entre le point de potentiel V₂ et le point de potentiel V_{B}, l'inductance Ls₂ étant située entre le point de potentiel V₂ et un point de potentiel V_{C2}, l'interrupteur k₂₂ étant situé entre le point de potentiel V₂ et le point de potentiel V₀, les moyens de commandes des interrupteurs étant aptes à maintenir simultanément l'interrupteur k₂ ouvert et l'interrupteurs k₂₂ fermé et réciproquement, la tension V_{S} étant mesurée entre le point de potentiel V_{C2} et entre le point de potentiel V₀.

Les moyens de commande commandent les interrupteurs k₁ et k₂ de manière identique mais décalée d'une demi-période T/2 de sorte que l'interrupteur k₁ soit ouvert lorsque l'interrupteur k₂ est fermé et réciproquement. Ainsi le premier et le second bras sont utilisés alternativement sur chaque demi-période de commutation T/2.

Dans ce mode de réalisation de l'invention, le rapport cyclique est multiplié par deux, la tension des transistors est divisée par deux, des cellules peuvent être associées en parallèle et la tension d'isolement est égale à celle des super-capacités 20.

La figure 4 représente un module 10 de conversion entre les tensions E et V_{S}.

Les moyens de commande commandent des interrupteurs (k₁, k₁₁, k₄₄, k₄, k₃, k₃₃, k₂₂, k₂).

Le module d'entrée comprend un premier filtre comprenant une première borne d'entrée et une seconde borne d'entrée reliée à la masse, pour l'application d'une première tension E/2, une première inductance Le₁ et une capacité C₁, l'inductance Le₁ et la capacité C₁ se rejoignant à un point de potentiel V_{A}.

Le module d'entrée comprend également un second filtre comprenant une troisième borne d'entrée et la seconde borne d'entrée reliée à la masse, pour l'application d'une première tension E/2, une seconde inductance Le₂ et une capacité C₂, l'inductance Le₂ et la capacité C₂ se rejoignant à un point de potentiel V_{B}, les capacités C₁ et C₂ se rejoignant à un point de potentiel V₀ 0 V.

Le premier bras comprend quatre interrupteurs (k₁, k₁₁, k₄₄, k₄) et deux inductances (Ls₁, Ls₁₁), l'interrupteur k₁ étant situé entre le point de potentiel V_{A} et un point de potentiel V₁, l'inductance Ls₁ étant située entre le point de potentiel V₁ et un point de potentiel V_{C1}, l'interrupteur k₁₁ étant situé entre le point de potentiel V₁ et le point de potentiel V₀, l'inductance Ls₁₁ étant située entre un point de potentiel V_{C2} et un point de potentiel V₄, l'interrupteur k₄₄ étant situé entre le point de potentiel V₀ et le point de potentiel V₄, l'interrupteur k₄ étant situé entre le point de potentiel V₄ et le point de potentiel V_{B}, les moyens de commandes des interrupteurs étant aptes à maintenir simultanément les interrupteurs k₁ et k₄ ouverts et les interrupteurs k₁₁ et k₄₄ fermés et réciproquement, une tension V_{S} étant mesurée entre le point de potentiel V_{C1} et entre le point de potentiel V₀, et une tension V_{S} étant mesurée entre le point de potentiel V₀ et le point de potentiel V_{C2}.

Le second bras comprend quatre interrupteurs (k₃, k₃₃, k₂₂, k₂) et deux inductances (Ls₂, Ls₂₂), l'interrupteur k₃ étant situé entre le point de potentiel V_{A} et un point de potentiel V₃, l'inductance Ls₂ étant située entre le point de potentiel V₃ et le point de potentiel V_{C1}, l'interrupteur k₃₃ étant situé entre le point de potentiel V₃ et le point de potentiel V₀, l'inductance Ls₂₂ étant située entre le point de potentiel V₂ et un point de potentiel V_{C2}, l'interrupteur k₂₂ étant situé entre le point de potentiel V₀ et le point de potentiel V₂, l'interrupteur k₂ étant situé entre le point de potentiel V₂ et le point de potentiel V_{B}, les moyens de commandes des interrupteurs étant aptes à maintenir simultanément les interrupteurs k₁ et k₄ ouverts et les interrupteurs k₁₁ et k₄₄ fermés et réciproquement, la tension V_{S} étant mesurée entre le point de potentiel V_{C1} et entre le point de potentiel V₀, et entre le point de potentiel V₀ et le point de potentiel V_{C2}.

Les moyens de commande commandent les interrupteurs (k₁, k₁₁, k₄₄, k₄, k₃, k₃₃, k₂₂, k₂) de sorte que le premier bras et le second bras sont utilisés alternativement sur chaque demi-période de commutation T/2. Les interrupteurs formant les demi-ponts [kᵢ, kᵢᵢ] (1 ≤ i ≤ 4) sont commandés de manière complémentaire. De même, notamment pour réduire la taille des éléments passifs, les commandes des interrupteurs k₁ et k₃, respectivement k₂ et k₄, sont complémentaires, décalées d'une demi-période. Les interrupteurs k₁ et k₄, respectivement k₂ et k₃, sont commandés de manière identique. En d'autres termes, les moyens de commande commandant les interrupteurs k₁ et k₄ de manière identique d'une part et k₂ et k₃ de manière identique d'autre part, k₁ et k₃ étant décalés d'une demi-période T/2 de sorte que les interrupteurs k₁ et k₄ soient ouverts lorsque les interrupteurs k₂ et k₃ sont fermés et réciproquement.

Dans ce mode de réalisation de l'invention, le rapport cyclique est multiplié par deux, la tension des transistors est divisée par deux, des cellules peuvent être associées en parallèle et la tension d'isolement est égale à celle des super-capacités 20.

La figure 5 représente un module 10 de conversion entre les tensions E et V_{S}.

Le module 10 de conversion comprend des moyens de commande commandant les interrupteurs (k₁, k₁₁, k₄₄, k₄, k₃, k₃₃, k₂₂, k₂).

Le module d'entrée comprend un premier filtre comprenant une première borne d'entrée et une seconde borne d'entrée reliée à la masse, pour l'application d'une première tension E/2, une première inductance Le₁ et une capacité C₁, l'inductance Le₁ et la capacité C₁ se rejoignant à un point de potentiel V_{A}.

Le module d'entrée comprend également un second filtre comprenant une troisième borne d'entrée et la seconde borne d'entrée reliée à la masse, pour l'application d'une première tension E/2, une seconde inductance Le₂ et une capacité C₂, l'inductance Le₂ et la capacité C₂ se rejoignant à un point de potentiel V_{B}.

Les capacités C₁ et C₂ se rejoignent à un point de potentiel V₀ = 0 V.

Le premier bras comprend quatre interrupteurs (k₁, k₁₁, k₄₄, k₄) et deux inductances (Ls₁, Ls₁₁), l'interrupteur k₁ étant situé entre le point de potentiel V_{A} et un point de potentiel V₁, l'inductance Ls₁ étant située entre le point de potentiel V₁ et un point de potentiel V_{C}, l'interrupteur k₁₁ étant situé entre le point de potentiel V₁ et le point de potentiel V₀, l'inductance Ls₁₁ étant située entre le point de potentiel V₀ et un point de potentiel V₄, l'interrupteur k₄₄ étant situé entre le point de potentiel V₀ et le point de potentiel V₄, l'interrupteur k₄ étant situé entre le point de potentiel V₄ et le point de potentiel V_{B}. Les moyens de commande des interrupteurs sont aptes à maintenir simultanément les interrupteurs k₁ et k₄ ouverts et les interrupteurs k₁₁ et k₄₄ fermés et réciproquement. La tension V_{S} est mesurée entre le point de potentiel V_{C} et V₀.

Le second bras comprend quatre interrupteurs (k₃, k₃₃, k₂₂, k₂) et deux inductances (Ls₂, Ls₂₂), l'interrupteur k₃ étant situé entre le point de potentiel V_{A} et un point de potentiel V₃, l'inductance Ls₂ étant située entre le point de potentiel V_{C} et le point de potentiel V₃, l'interrupteur k₃₃ étant situé entre le point de potentiel V₃ et le point de potentiel V₀, l'inductance Ls₂₂ étant située entre le point de potentiel V₀ et un point de potentiel V₂, l'interrupteur k₂₂ étant situé entre le point de potentiel V₀ et le point de potentiel V₂, l'interrupteur k₂ étant situé entre le point de potentiel V₂ et le point de potentiel V_{B}. Les moyens de commande des interrupteurs sont aptes à maintenir simultanément les interrupteurs k₁ et k₄ ouverts et les interrupteurs k₁₁ et k₄₄ fermés et réciproquement. La tension V_{S} est mesurée entre le point de potentiel V_{C} et V₀.

Les moyens de commande commandent les interrupteurs (k₁, k₁₁, k₄₄, k₄, k₃, k₃₃, k₂₂, k₂) de sorte que le premier bras et le second bras sont utilisés alternativement sur chaque demi-période de commutation T/2. Les interrupteurs formant les demi-ponts [kᵢ, kᵢᵢ] (1 ≤ i ≤ 4) sont commandés de manière complémentaire. De même, notamment pour réduire la taille des éléments passifs, les commandes des interrupteurs k₁ et k₃, respectivement k₂ et k₄, sont complémentaires, décalées d'une demi-période. Les interrupteurs k₁ et k₄, respectivement k₂ et k₃, sont commandés de manière identique.

En notant dT le temps de conduction des transistors kᵢ et T la période de commutation, en première approximation en négligeant les chutes de tension ohmiques des composants, la relation entre la tension de la super-capacité et la tension du réseau est VS = d*E. En fonction du niveau de tension de la super-capacité, le réglage de d permet de contrôler le courant de charge ou de décharge. d varie comme le rapport Vs/E, c'est-à-dire que, par exemple, pour E = 270 V et 0 < Vs ≤ 120, alors d varie entre 60/270 et 120/270. Un contrôle de tension du point milieu 0V est éventuellement nécessaire. La variation de d peut être réalisée, par exemple, à partir d'un module de Modulation de Largeur d'Impulsion (MLI) en analogique ou en numérique.

Le module 10 de conversion étant ainsi constitué de deux bras, la fréquence de dimensionnement des filtres correspond à deux fois la fréquence de commutation des transistors des interrupteurs desdits bras.

Dans ce mode de réalisation de l'invention, le rapport cyclique est multiplié par deux, la tension des transistors est divisée par deux, des cellules peuvent être associées en parallèle et la tension d'isolement est égale à celle de la super-capacité 20 divisée par deux.

## Revendications

1. Module de conversion de tension entre un réseau électrique haute tension d'un aéronef, notamment un réseau en courant continu haute tension, et au moins un élément de stockage d'énergie dudit aéronef, notamment une super-capacité, ledit module de conversion étant apte à effectuer réversiblement une conversion entre une tension continue E du réseau électrique haute tension de l'aéronef et une tension continue V_{S} de l'élément de stockage d'énergie de l'aéronef, **caractérisé en ce que** ladite tension V_{S} de l'élément de stockage de l'aéronef étant flottante par rapport à la tension E du réseau électrique haute tension de l'aéronef et centrée par rapport à la masse de l'aéronef, le module comprenant un module d'entrée, comprenant deux filtres aptes à recevoir chacun une tension continue E/2, un premier bras et un second bras comprenant des interrupteurs, et des moyens de commande desdits interrupteurs, les moyens de commande fonctionnant par cycle d'une période T de commutation et étant aptes à commander au moins un premier interrupteur du premier bras et au moins un second interrupteur du second bras de manière identique mais décalée d'une demi-période T/2 de sorte que le premier interrupteur soit ouvert quand le second interrupteur est fermé et réciproquement.

2. Module selon la revendication 1, dans lequel les moyens de commande commandent des interrupteurs (k₁, k₁₁, k₄₄, k₄, k₃, k₃₃, k₂₂, k₂) et dans lequel :
- le module d'entrée comprend :
i. une première borne d'entrée et une seconde borne d'entrée reliée à la masse, pour l'application d'une première tension E/2, une première inductance Le₁ et une capacité C₁, l'inductance Le₁ et la capacité C₁ se rejoignant à un point de potentiel V_{A},
ii. une troisième borne d'entrée et la seconde borne d'entrée reliée à la masse, pour l'application d'une première tension E/2, une seconde inductance Le₂ et une capacité C₂, l'inductance Le₂ et la capacité C₂ se rejoignant à un point de potentiel V_{B}, les capacités C₁ et C₂ se rejoignant à un point de potentiel V₀ = 0 V,
- le premier bras comprend quatre interrupteurs (k₁, k₁₁, k₄₄, k₄) et deux inductances (Ls₁, Ls₁₁), l'interrupteur k₁ étant situé entre le point de potentiel V_{A} et un point de potentiel V₁, l'inductance Ls₁ étant située entre le point de potentiel V₁ et un point de potentiel V_{C}, l'interrupteur k₁₁ étant situé entre le point de potentiel V₁ et le point de potentiel V₀, l'inductance Ls₁₁ étant située entre le point de potentiel V₀ et un point de potentiel V₄, l'interrupteur k₄₄ étant situé entre le point de potentiel V₀ et le point de potentiel V₄, l'interrupteur k₄ étant situé entre le point de potentiel V₄ et le point de potentiel V_{B}, les moyens de commandes des interrupteurs étant aptes à maintenir simultanément les interrupteurs k₁ et k₄ ouverts et les interrupteurs k₁₁ et k₄₄ fermés et réciproquement, la tension V_{S} étant mesurée entre le point de potentiel V_{C} et V₀ ;
- le second bras comprend quatre interrupteurs (k₃, k₃₃, k₂₂, k₂) et deux inductances (Ls₂, Ls₂₂), l'interrupteur k₃ étant situé entre le point de potentiel V_{A} et un point de potentiel V₃, l'inductance Ls₂ étant située entre le point de potentiel V_{C} et le point de potentiel V₃, l'interrupteur k₃₃ étant situé entre le point de potentiel V₃ et le point de potentiel V₀, l'inductance Ls₂₂ étant située entre le point de potentiel V₀ et un point de potentiel V₂, l'interrupteur k₂₂ étant situé entre le point de potentiel V₀ et le point de potentiel V₂, l'interrupteur k₂ étant situé entre le point de potentiel V₂ et le point de potentiel V_{B}, les moyens de commande des interrupteurs étant aptes à maintenir simultanément les interrupteurs k₃ et k₂ ouverts et les interrupteurs k₃₃ et k₂₂ fermés et réciproquement, la tension V_{S} étant mesurée entre le point de potentiel V_{C} et V₀, et
- les moyens de commande commandent les interrupteurs k₁ et k₄ de manière identique d'une part et k₂ et k₃ de manière identique d'autre part, les interrupteurs k₁ et k₃ étant décalés d'une demi-période T/2 de sorte que les interrupteurs k₁ et k₄ soient ouverts lorsque les interrupteurs k₂ et k₃ sont fermés et réciproquement.

3. Module selon la revendication 1, dans lequel les moyens de commande commandent des interrupteurs (k₁, k₁₁, k₂₂, k₂) et dans lequel :
- le module d'entrée comprend :
i. une première borne d'entrée et une seconde borne d'entrée reliée à la masse, pour l'application d'une première tension E/2, une première inductance Le₁ et une capacité C₁, l'inductance Le₁ et la capacité C₁ se rejoignant à un point de potentiel V_{A},
ii. une troisième borne d'entrée et la seconde borne d'entrée reliée à la masse, pour l'application d'une première tension E/2, une seconde inductance Le₂ et une capacité C₂, l'inductance Le₂ et la capacité C₂ se rejoignant à un point de potentiel V_{B}, les capacités C₁ et C₂ se rejoignant à un point de potentiel V₀ = 0 V,
- le premier bras comprend deux interrupteurs (k₁, k₁₁) et une inductance Ls₁, l'interrupteur k₁ étant situé entre le point de potentiel V_{A} et un point de potentiel V₁, l'inductance Ls₁ étant située entre le point de potentiel V₁ et un point de potentiel V_{C1}, l'interrupteur k₁₁ étant situé entre le point de potentiel V₁ et le point de potentiel V₀, la tension V_{S} étant mesurée entre le point de potentiel V_{C1} et V₀, les moyens de commande des interrupteurs étant aptes à maintenir simultanément l'interrupteur k₁ ouvert et l'interrupteurs k₁₁ fermé et réciproquement, la tension V_{S} étant mesurée entre le point de potentiel V_{C1} et V₀ ;
- le second bras comprend deux interrupteurs (k₂, k₂₂) et une inductance Ls₂,
l'interrupteur k₂ étant situé entre le point de potentiel V₂ et le point de potentiel V_{B}, l'inductance Ls₂ étant située entre le point de potentiel V₂ et un point de potentiel V_{C2}, l'interrupteur k₂₂ étant situé entre le point de potentiel V₂ et le point de potentiel V₀, les moyens de commande des interrupteurs étant aptes à maintenir simultanément l'interrupteur k₂ ouvert et l'interrupteurs k₂₂ fermé et réciproquement, la tension V_{S} étant mesurée entre le point de potentiel V_{C2} et entre le point de potentiel V₀, et
- les moyens de commande commandent les interrupteurs k₁ et k₂ de manière identique mais décalée d'une demi-période T/2 de sorte que l'interrupteur k₁ soit ouvert lorsque l'interrupteur k₂ est fermé et réciproquement.

4. Module selon la revendication 1, dans lequel les moyens de commande commandent des interrupteurs (k₁, k₁₁, k₄₄, k₄, k₃, k₃₃, k₂₂, k₂) et dans lequel :
- le module d'entrée comprend :
i. une première borne d'entrée et une seconde borne d'entrée reliée à la masse, pour l'application d'une première tension E/2, une première inductance Le₁ et une capacité C₁, l'inductance Le₁ et la capacité C₁ se rejoignant à un point de potentiel V_{A},
ii. une troisième borne d'entrée et la seconde borne d'entrée reliée à la masse, pour l'application d'une première tension E/2, une seconde inductance Le₂ et une capacité C₂, l'inductance Le₂ et la capacité C₂ se rejoignant à un point de potentiel V_{B}, les capacités C₁ et C₂ se rejoignant à un point de potentiel V₀ = 0 V,
- le premier bras comprenant quatre interrupteurs (k₁, k₁₁, k₄₄, k₄) et deux inductances (Ls₁, Ls₁₁), l'interrupteur k₁ étant situé entre le point de potentiel V_{A} et un point de potentiel V₁, l'inductance Ls₁ étant située entre le point de potentiel V₁ et un point de potentiel V_{C1}, l'interrupteur k₁₁ étant situé entre le point de potentiel V₁ et le point de potentiel V₀, l'inductance Ls₁₁ étant située entre un point de potentiel V_{C2} et un point de potentiel V₄, l'interrupteur k₄₄ étant situé entre le point de potentiel V₀ et le point de potentiel V₄, l'interrupteur k₄ étant situé entre le point de potentiel V₄ et le point de potentiel V_{B}, les moyens de commande des interrupteurs étant aptes à maintenir simultanément les interrupteurs k₁ et k₄ ouverts et les interrupteurs k₁₁ et k₄₄ fermés et réciproquement, la tension V_{S} étant mesurée entre le point de potentiel V_{C1} et entre le point de potentiel V₀, et entre le point de potentiel V₀ et le point de potentiel V_{C2} ;
- le second bras comprenant quatre interrupteurs (k₃, k₃₃, k₂₂, k₂) et deux inductances (Ls₂, Ls₂₂), l'interrupteur k₃ étant situé entre le point de potentiel V_{A} et un point de potentiel V₃, l'inductance Ls₂ étant située entre le point de potentiel V₃ et le point de potentiel V_{C1}, l'interrupteur k₃₃ étant situé entre le point de potentiel V₃ et le point de potentiel V₀, l'inductance Ls₂₂ étant située entre le point de potentiel V₂ et un point de potentiel V_{C2}, l'interrupteur k₂₂ étant situé entre le point de potentiel V₀ et le point de potentiel V₂, l'interrupteur k₂ étant situé entre le point de potentiel V₂ et le point de potentiel V_{B}, les moyens de commande des interrupteurs étant aptes à maintenir simultanément les interrupteurs k₃ et k₂ ouverts et les interrupteurs k₃₃ et k₄₄₂₂ fermés et réciproquement, la tension V_{S} étant mesurée entre le point de potentiel V_{C1} et entre le point de potentiel V₀, et entre le point de potentiel V₀ et le point de potentiel V_{C2}, et
- les moyens de commande commandant les interrupteurs k₁ et k₄ de manière identique d'une part et k₂ et k₃ de manière identique d'autre part, k₁ et k₃ étant décalés d'une demi-période T/2 de sorte que les interrupteurs k₁ et k₄ soient ouverts lorsque les interrupteurs k₂ et k₃ sont fermés et réciproquement.

5. Module selon l'une quelconque des revendications précédentes, dans lequel E = 270 ou 540 V et 60 < V_{S} < 120 V.

6. Système de stockage comprenant un module de conversion selon l'une quelconque des revendications 1 à 5 et au moins un élément de stockage connecté entre les points de potentiel correspondant à la tension V_{S}.

7. Système de stockage selon la revendication 6, dans lequel un élément de stockage est connecté entre les points de potentiel V_{C} et V₀.

8. Système de stockage selon la revendication 6, dans lequel un premier élément de stockage est connecté entre les points de potentiel V_{C1} et V₀ et un second élément de stockage est connecté entre les points de potentiel V₀ et V_{C2}.

9. Système selon la revendication 6, dans lequel l'élément de stockage est une super-capacité.

10. Système selon la revendication 9, dans lequel la super-capacité est configurée pour stocker de l'énergie lorsqu'une tension d'entrée V_{S} lui est appliquée, avec 60 ≤ V_{S} ≤ 120 V.

11. Système selon la revendication 6, dans lequel l'élément de stockage est une batterie.

12. Système selon la revendication 11, dans lequel la batterie est configurée pour stocker de l'énergie lorsqu'une tension d'entrée V_{S} lui est appliquée, avec 60 ≤ V_{S} ≤ 120 V.

## Patentansprüche

1. Modul zur Spannungsumwandlung zwischen einem elektrischen Hochspannungsnetz eines Luftfahrzeugs, insbesondere einem Hochspannungs-Gleichstromnetz, und mindestens einem Energiespeicherelement des Luftfahrzeugs, insbesondere einem leistungsstarken Kondensator, wobei das Umwandlungsmodul in der Lage ist, eine Umwandlung zwischen einer Gleichspannung E des elektrischen Hochspannungsnetzes des Luftfahrzeugs und einer Gleichspannung V_{S} des Energiespeicherelements des Luftfahrzeugs umkehrbar auszuführen, **dadurch gekennzeichnet, dass** die Spannung V_{S} des Speicherelements des Luftfahrzeugs in Bezug auf die Spannung E des Hochspannungsstromnetzes des Luftfahrzeugs schwebend und in Bezug auf die Masse des Luftfahrzeugs zentriert ist, wobei das Modul ein Eingangsmodul, das zwei Filter umfasst, die in der Lage sind, jeweils eine Gleichspannung E/2 zu empfangen, einen ersten Zweig und einen zweiten Zweig, die Schalter umfassen, und Mittel zum Steuern der Schalter umfasst, wobei die Steuermittel in einem Zyklus einer Schaltperiode T funktionieren und in der Lage sind, mindestens einen ersten Schalter des ersten Zweigs und mindestens einen zweiten Schalter des zweiten Zweigs identisch jedoch um eine halbe Periode T/2 versetzt zu steuern, so dass der erste Schalter offen ist, wenn der zweite Schalter geschlossen ist, und umgekehrt.

2. Modul nach Anspruch 1, wobei die Steuermittel Schalter (k₁, k₁₁, k₄₄, k₄, k₃, k₃₃, k₂₂, k₂) steuern, und wobei:
- das Eingangsmodul Folgendes umfasst:
i. eine erste Eingangsklemme und eine zweite Eingangsklemme, die mit Masse verbunden ist, zum Anlegen einer ersten Spannung E/2, eine erste Drosselspule Le₁ und einen Kondensator C₁, wobei sich die Drosselspule Le₁ und der Kondensator C₁ an einem Potentialpunkt V_{A} treffen,
ii. eine dritte Eingangsklemme und die zweite Eingangsklemme, die mit Masse verbunden ist, zum Anlegen einer ersten Spannung E/2, eine zweite Drosselspule Le₂ und einen Kondensator C₂, wobei sich die Drosselspule Le₂ und der Kondensator C₂ an einem Potentialpunkt V_{B} treffen, wobei sich die Kondensatoren C₁ und C₂ an einem Potentialpunkt V₀ = 0 V treffen,
- der erste Zweig vier Schalter (k₁, k₁₁, k₄₄, k₄) und zwei Drosselspulen (Ls₁, Ls₁₁) umfasst, wobei sich der Schalter k₁ zwischen dem Potentialpunkt V_{A} und einem Potentialpunkt V₁, befindet, wobei sich die Drosselspule Ls₁ zwischen dem Potentialpunkt V₁ und einem Potentialpunkt V_{C} befindet, wobei sich der Schalter k₁₁ zwischen dem Potentialpunkt V₁ und dem Potentialpunkt V₀ befindet, wobei sich die Drosselspule Ls₁₁ zwischen dem Potentialpunkt V₀ und einem Potentialpunkt V₄ befindet, wobei sich der Schalter k₄₄ zwischen dem Potentialpunkt V₀ und dem Potentialpunkt V₄ befindet, wobei sich der Schalter k₄ zwischen dem Potentialpunkt V₄ und dem Potentialpunkt V_{B} befindet, wobei die Mittel zum Steuern der Schalter in der Lage sind, gleichzeitig die Schalter k₁ und k₄ offen und die Schalter k₁₁ und k₄₄ geschlossen zu halten und umgekehrt, wobei die Spannung V_{S} zwischen den Potentialpunkten V_{C} und V₀ gemessen wird;
- der zweite Zweig vier Schalter (k₃, k₃₃, k₂₂, k₂) und zwei Drosselspulen (Ls₂, Ls₂₂) umfasst, wobei sich der Schalter k₃ zwischen dem Potentialpunkt V_{A} und einem Potentialpunkt V₃ befindet, wobei sich die Drosselspule Ls₂ zwischen dem Potentialpunkt V_{C} und dem Potentialpunkt V₃ befindet, wobei sich der Schalter k₃₃ zwischen dem Potentialpunkt V₃ und dem Potentialpunkt V₀ befindet, wobei sich die Drosselspule Ls₂₂ zwischen dem Potentialpunkt V₀ und einem Potentialpunkt V₂ befindet, wobei sich der Schalter k₂₂ zwischen dem Potentialpunkt V₀ und dem Potentialpunkt V₂ befindet, wobei sich der Schalter k₂ zwischen dem Potentialpunkt V₂ und dem Potentialpunkt V_{B} befindet, wobei die Mittel zum Steuern der Schalter in der Lage sind, gleichzeitig die Schalter k₃ und k₂ offen und die Schalter k₃₃ und k₂₂ geschlossen zu halten und umgekehrt, wobei die Spannung V_{S} zwischen den Potentialpunkten V_{C} und V₀ gemessen wird, und
- die Steuermittel die Schalter einerseits k₁ und k₄ identisch und andererseits k₂ und k₃ identisch steuern, wobei die Schalter k₁ und k₃ um eine halbe Periode T/2 versetzt sind, so dass die Schalter k₁ und k₄ offen sind, wenn die Schalter k₂ und k₃ geschlossen sind und umgekehrt.

3. Module nach Anspruch 1, wobei die Steuermittel Schalter (k₁, k₁₁, k₂₂, k₂) steuern, und wobei:
- das Eingangsmodul Folgendes umfasst:
i. eine erste Eingangsklemme und eine zweite Eingangsklemme, die mit Masse verbunden ist, zum Anlegen einer ersten Spannung E/2, eine erste Drosselspule Le₁ und einen Kondensator C₁, wobei sich die Drosselspule Le₁ und der Kondensator C₁ an einem Potentialpunkt V_{A} treffen,
ii. eine dritte Eingangsklemme und die zweite Eingangsklemme, die mit Masse verbunden ist, zum Anlegen einer ersten Spannung E/2, eine zweite Drosselspule Le₂ und einen Kondensator C₂, wobei sich die Drosselspule Le₂ und der Kondensator C₂ an einem Potentialpunkt V_{B} treffen, wobei sich die Kondensatoren C₁ und C₂ an einem Potentialpunkt V₀ = 0 V treffen,
- der erste Zweig zwei Schalter (k₁, k₁₁) und eine Drosselspule Ls₁ umfasst, wobei sich der Schalter k₁ zwischen dem Potentialpunkt V_{A} und einem Potentialpunkt V₁ befindet, wobei sich die Drosselspule Ls₁ zwischen dem Potentialpunkt V₁ und einem Potentialpunkt V_{C1} befindet, wobei sich der Schalter k₁₁ zwischen dem Potentialpunkt V₁ und dem Potentialpunkt V₀ befindet, wobei die Spannung V_{S} zwischen den Potentialpunkten V_{C1} und V₀ gemessen wird, wobei die Mittel zum Steuern der Schalter in der Lage sind, gleichzeitig den Schalter k₁ offen und die Schalter k₁₁ geschlossen zu halten und umgekehrt, wobei die Spannung V_{S} zwischen den Potentialpunkten V_{C1} und V₀ gemessen wird;
- der zweite Zweig zwei Schalter (k₂, k₂₂) und eine Drosselspule Ls₂ umfasst, wobei sich der Schalter k₂ zwischen dem Potentialpunkt V₂ und dem Potentialpunkt V_{B} befindet, wobei sich die Drosselspule Ls₂ zwischen dem Potentialpunkt V₂ und einem Potentialpunkt V_{C2} befindet, wobei sich der Schalter k₂₂ zwischen dem Potentialpunkt V₂ und dem Potentialpunkt V₀ befindet, wobei die Mittel zum Steuern der Schalter in der Lage sind, gleichzeitig den Schalter k₂ offen und die Schalter k₂₂ geschlossen zu halten und umgekehrt, wobei die Spannung V_{S} zwischen dem Potentialpunkt V_{C2} und dem Potentialpunkt V₀ gemessen wird, und
- die Steuermittel die Schalter k₁ und k₂ identisch jedoch um eine halbe Periode T/2 versetzt zu steuern, so dass der Schalter k₁ offen ist, wenn der Schalter k₂ geschlossen ist und umgekehrt.

4. Modul nach Anspruch 1, wobei die Steuermittel die Schalter (k₁, k₁₁, k₄₄, k₄, k₃, k₃₃, k₂₂, k₂) steuern, und wobei:
- das Eingangsmodul Folgendes umfasst:
i. eine erste Eingangsklemme und eine zweite Eingangsklemme, die mit Masse verbunden ist, zum Anlegen einer ersten Spannung E/2, eine erste Drosselspule Le₁ und einen Kondensator C₁, wobei sich die Drosselspule Le₁ und der Kondensator C₁ an einem Potentialpunkt V_{A} treffen,
ii. eine dritte Eingangsklemme und die zweite Eingangsklemme, die mit Masse verbunden ist, zum Anlegen einer ersten Spannung E/2, eine zweite Drosselspule Le₂ und einen Kondensator C₂, wobei sich die Drosselspule Le₂ und der Kondensator C₂ an einem Potentialpunkt V_{B} treffen, wobei sich die Kondensatoren C₁ und C₂ an einem Potentialpunkt V₀ = 0 V treffen,
- wobei der erste Zweig vier Schalter (k₁, k₁₁, k₄₄, k₄) und zwei Drosselspulen (Ls₁, Ls₁₁) umfasst, wobei sich der Schalter k₁ zwischen dem Potentialpunkt V_{A} und einem Potentialpunkt V₁ befindet, wobei sich die Drosselspule Ls₁ zwischen dem Potentialpunkt V₁ und einem Potentialpunkt V_{C1} befindet, wobei sich der Schalter k₁₁ zwischen dem Potentialpunkt V₁ und dem Potentialpunkt V₀ befindet, wobei sich die Drosselspule Ls₁₁ zwischen einem Potentialpunkt V_{C2} und einem Potentialpunkt V₄ befindet, wobei sich der Schalter k₄₄ zwischen dem Potentialpunkt V₀ und dem Potentialpunkt V₄ befindet, wobei sich der Schalter k₄ zwischen dem Potentialpunkt V₄ und dem Potentialpunkt V_{B} befindet, wobei die Mittel zum Steuern der Schalter in der Lage sind, gleichzeitig Schalter k₁ und k₄ offen und die Schalter k₁₁ und k₄₄ geschlossen zu halten und umgekehrt, wobei die Spannung V_{S} zwischen dem Potentialpunkt V_{C1} und zwischen dem Potentialpunkt V₀ und zwischen dem Potentialpunkt V₀ und dem Potentialpunkt V_{C2} gemessen wird;
- wobei der zweite Zweig vier Schalter (k₃, k₃₃, k₂₂, k₂) und zwei Drosselspulen (Ls₂, Ls₂₂) umfasst, wobei sich der Schalter k₃ zwischen dem Potentialpunkt V_{A} und einem Potentialpunkt V₃ befindet, wobei sich die Drosselspule Ls₂ zwischen dem Potentialpunkt V₃ und dem Potentialpunkt V_{C1} befindet, wobei sich der Schalter k₃₃ zwischen dem Potentialpunkt V₃ und dem Potentialpunkt V₀ befindet, wobei sich die Drosselspule Ls₂₂ zwischen dem Potentialpunkt V₂ und einem Potentialpunkt V_{C2} befindet, wobei sich der Schalter k₂₂ zwischen dem Potentialpunkt V₀ und dem Potentialpunkt V₂ befindet, wobei sich der Schalter k₂ zwischen dem Potentialpunkt V₂ und dem Potentialpunkt V_{B} befindet, wobei die Mittel zum Steuern der Schalter in der Lage sind, gleichzeitig die Schalter k₃ und k₂ offen und die Schalter k₃₃ und k₄₄₂₂ geschlossen zu halten und umgekehrt, wobei die Spannung V_{S} zwischen dem Potentialpunkt V_{C1} und zwischen dem Potentialpunkt V₀ und zwischen dem Potentialpunkt V₀ und dem Potentialpunkt V_{C2} gemessen wird, und
- die Steuermittel die Schalter einerseits k₁ und k₄ identisch und andererseits k₂ und k₃ identisch steuern, wobei k₁ und k₃ um eine halbe Periode T/2 versetzt sind, so dass die Schalter k₁ und k₄ offen sind, wenn die Schalter k₂ und k₃ geschlossen sind und umgekehrt.

5. Modul nach einem der vorhergehenden Ansprüche, wobei E = 270 oder 540 V und 60 < V_{S} < 120 V.

6. Speichersystem, umfassend ein Umwandlungsmodul nach einem der Ansprüche 1 bis 5 und mindestens ein Speicherelement, das zwischen den Potentialpunkten verbunden ist, die der Spannung V_{S} entsprechen.

7. Speichersystem nach Anspruch 6, wobei ein Speicherelement zwischen den Potentialpunkten V_{C} und V₀ verbunden ist.

8. Speichersystem nach Anspruch 6, wobei ein erstes Speicherelement zwischen den Potentialpunkten V_{C1} und V₀ verbunden ist, und ein zweites Speicherelement zwischen den Potentialpunkten V₀ und V_{C2} verbunden ist.

9. System nach Anspruch 6, wobei das Speicherelement ein leistungsstarker Kondensator ist.

10. System nach Anspruch 9, wobei der leistungsstarke Kondensator konfiguriert ist, um Energie zu speichern, wenn eine Eingangsspannung V_{S} daran angelegt wird, wobei 60 ≤ V_{S} ≤ 120 V.

11. System nach Anspruch 6, wobei das Speicherelement eine Batterie ist.

12. System nach Anspruch 11, wobei die Batterie konfiguriert ist, um Energie zu speichern, wenn eine Eingangsspannung V_{S} daran angelegt wird, wobei 60 ≤ V_{S} ≤ 120 V.

## Claims

1. A module for converting voltage between a high-voltage electrical network of an aircraft, especially a high-voltage DC network, and at least one energy storage element of said aircraft, especially a super-capacitor, said conversion module being able to reversibly perform a conversion between a DC voltage E of the high-voltage electrical network of the aircraft and a DC voltage V_{S} of the energy storage element of the aircraft, **characterized in that** said voltage V_{S} of the aircraft storage element being floating with respect to the voltage E of the high-voltage electrical network of the aircraft and centered with respect to the earth of the aircraft, the module comprising an input module, comprising two filters each able to receive a DC voltage E/2, a first arm and a second arm comprising switches, and control means for said switches, the control means operating by cycle of a switching period T and being able to control at least one first switch of the first arm and at least one second switch of the second arm in an identical manner but shifted by a half-period T/2 so that the first switch is open when the second switch is closed and vice versa.

2. The module as claimed in claim 1, in which the control means control switches (k_{1,} k₁₁, k₄₄, k₄, k₃, k₃₃, k₂₂, k₂) and in which:
- the input module comprises:
i. a first input terminal and a second input terminal which is linked to earth, for the application of a first voltage E/2, a first inductor Le₁ and a capacitor C₁, the inductor Le₁ and the capacitor C₁ being joined to a point with potential V_{A},
ii. a third input terminal and the second input terminal which is linked to earth, for the application of a first voltage E/2, a second inductor Le₂ and a capacitor C₂, the inductor Le₂ and the capacitor C₂ being joined to a point with potential V_{B}, the capacitors C₁ and C₂ being joined to a point with potential V₀ = 0 V,
- the first arm comprises four switches (k_{1,} k₁₁, k₄₄, k₄) and two inductors (Ls₁, Ls₁₁), the switch k₁ being situated between the point with potential V_{A} and a point with potential V₁, the inductor Ls₁ being situated between the point with potential V₁ and a point with potential V_{C}, the switch k₁₁ being situated between the point with potential V₁ and the point with potential V₀, the inductor Ls₁₁ being situated between the point with potential V₀ and a point with potential V₄, the switch k₄₄ being situated between the point with potential V₀ and the point with potential V₄, the switch k₄ being situated between the point with potential V₄ and the point with potential V_{B}, the control means for the switches being able simultaneously to maintain the switches k₁ and k₄ open and the switches k₁₁ and k₄₄ closed and vice versa, the voltage V_{S} being measured between the point with potential V_{C} and V₀;
- the second arm comprises four switches (k₃, k₃₃, k₂₂, k₂) and two inductors (Ls₂, Ls₂₂), the switch k₃ being situated between the point with potential V_{A} and a point with potential V₃, the inductor Ls₂ being situated between the point with potential V_{C} and the point with potential V₃, the switch k₃₃ being situated between the point with potential V₃ and the point with potential V₀, the inductor Ls₂₂ being situated between the point with potential V₀ and a point with potential V₂, the switch k₂₂ being situated between the point with potential V₀ and the point with potential V₂, the switch k₂ being situated between the point with potential V₂ and the point with potential V_{B}, the control means for the switches being able simultaneously to maintain the switches k₃ and k₂ open and the switches k₃₃ and k₂₂ closed and vice versa, the voltage V_{S} being measured between the point with potential V_{C} and V₀, and
- the control means control the switches k₁ and k₄ in an identical manner on the one hand and k₂ and k₃ in an identical manner on the other hand, the switches k₁ and k₃ being shifted by a half-period T/2 so that the switches k₁ and k₄ are open when the switches k₂ and k₃ are closed and vice versa.

3. The module as claimed in claim 1, in which the control means control switches (k_{1,} k₁₁, k₂₂, k₂) and in which:
- the input module comprises:
i. a first input terminal and a second input terminal which is linked to earth, for the application of a first voltage E/2, a first inductor Le₁ and a capacitor C₁, the inductor Le₁ and the capacitor C₁ being joined to a point with potential V_{A},
ii. a third input terminal and the second input terminal which is linked to earth, for the application of a first voltage E/2, a second inductor Le₂ and a capacitor C₂, the inductor Le₂ and the capacitor C₂ being joined to a point with potential V_{B}, the capacitors C₁ and C₂ being joined to a point with potential V₀ = 0 V,
- the first arm comprises two switches (k₁, k₁₁) and an inductor Ls₁, the switch k₁ being situated between the point with potential V_{A} and a point with potential V₁, the inductor Ls₁ being situated between the point with potential V₁ and a point with potential V_{C1}, the switch k₁₁ being situated between the point with potential V₁ and the point with potential V₀, the voltage V_{S} being measured between the point with potential V_{C1} and V₀, the control means for the switches being able simultaneously to maintain the switch k₁ open and the switch k₁₁ closed and vice versa, the voltage V_{S} being measured between the point with potential V_{C1} and V_{0;}
- the second arm comprises two switches (k₂, k₂₂) and an inductor Ls₂,
the switch k₂ being situated between the point with potential V₂ and the point with potential V_{B}, the inductor Ls₂ being situated between the point with potential V₂ and a point with potential V_{C2}, the switch k₂₂ being situated between the point with potential V₂ and the point with potential V₀, the control means for the switches being able simultaneously to maintain the switch k₂ open and the switch k₂₂ closed and vice versa, the voltage V_{S} being measured between the point with potential V_{C2} and between the point with potential V₀, and
- the control means control the switches k₁ and k₂ in an identical manner but shifted by a half-period T/2 so that the switch k₁ is open when the switch k₂ is closed and vice versa.

4. The module as claimed in claim 1, in which the control means control switches (k_{1,} k₁₁, k₄₄, k₄, k₃, k₃₃, k₂₂, k₂) and in which:
- the input module comprises:
i. a first input terminal and a second input terminal which is linked to earth, for the application of a first voltage E/2, a first inductor Le₁ and a capacitor C₁, the inductor Le₁ and the capacitor C₁ being joined to a point with potential V_{A},
ii. a third input terminal and the second input terminal which is linked to earth, for the application of a first voltage E/2, a second inductor Le₂ and a capacitor C₂, the inductor Le₂ and the capacitor C₂ being joined to a point with potential V_{B}, the capacitors C₁ and C₂ being joined to a point with potential V₀ = 0 V,
- the first arm comprising four switches (k_{1,} k₁₁, k₄₄, k₄) and two inductors (Ls₁, Ls₁₁), the switch k₁ being situated between the point with potential V_{A} and a point with potential V₁, the inductor Ls₁ being situated between the point with potential V₁ and a point with potential V_{C1}, the switch k₁₁ being situated between the point with potential V₁ and the point with potential V₀, the inductor Ls₁₁ being situated between a point with potential V_{C2} and a point with potential V₄, the switch k₄₄ being situated between the point with potential V₀ and the point with potential V₄, the switch k₄ being situated between the point with potential V₄ and the point with potential V_{B}, the control means for the switches being able simultaneously to maintain the switches k₁ and k₄ open and the switches k₁₁ and k₄₄ closed and vice versa, the voltage V_{S} being measured between the point with potential V_{C1} and between the point with potential V₀, and between the point with potential V₀ and the point with potential V_{C2};
- the second arm comprising four switches (k₃, k₃₃, k₂₂, k₂) and two inductors (Ls₂, Ls₂₂), the switch k₃ being situated between the point with potential V_{A} and a point with potential V₃, the inductor Ls₂ being situated between the point with potential V₃ and the point with potential V_{C1}, the switch k₃₃ being situated between the point with potential V₃ and the point with potential V₀, the inductor Ls₂₂ being situated between the point with potential V₂ and a point with potential V_{C2}, the switch k₂₂ being situated between the point with potential V₀ and the point with potential V₂, the switch k₂ being situated between the point with potential V₂ and the point with potential V_{B}, the control means for the switches being able simultaneously to maintain the switches k₃ and k₂ open and the switches k₃₃ and k₂₂ closed and vice versa, the voltage V_{S} being measured between the point with potential V_{C1} and between the point with potential V₀, and between the point with potential V₀ and the point with potential V_{C2}, and
- the control means controlling the switches k₁ and k₄ in an identical manner on the one hand and k₂ and k₃ in an identical manner on the other hand, k₁ and k₃ being shifted by a half-period T/2 so that the switches k₁ and k₄ are open when the switches k₂ and k₃ are closed and vice versa.

5. The module as claimed in claim 1, in which E = 270 or 540 V and 60 < V_{S} < 120 V.

6. A storage system comprising a conversion module as claimed in one of claims 1 to 5 and at least one storage element connected between the points with potential corresponding to the voltage V_{S}.

7. The storage system as claimed in claim 6, in which a storage element is connected between the points with potential V_{C} and V₀.

8. The storage system as claimed in claim 6, in which a first storage element is connected between the points with potential V_{C1} and V₀ and a second storage element is connected between the points with potential V₀ and V_{C2}.

9. The system as claimed in claim 6, in which the storage element is a super-capacitor.

10. The system as claimed in claim 9, in which the super-capacitor is configured to store energy when an input voltage V_{S} is applied to it, with 60 ≤ V_{S} ≤ 120 V.

11. The system as claimed in claim 6, in which the storage element is a battery.

12. The system as claimed in claim 11, in which the battery is configured to store energy when an input voltage V_{S} is applied to it, with 60 ≤ V_{S} ≤ 120 V.
